# EUROPEAN PATENT APPLICATION

(11) **EP 2 925 000 A1**
(43) Date of publication of application: **30.09.2015**
(21) Application number: 15157313.6
(22) Date of filing: 03.03.2015
(51) Int. Cl.: H04N 21/2343, G06F 17/24, G06F 3/0485, H04N 21/462, H04N 21/4728

(54) **Image processing apparatus and method**

(30) Priority: 28.03.2014 JP 2014067812
(71) Applicant: Sony Corporation, Tokyo 108-0075 (JP)
(72) Inventor: Izumi, Nobuaki, Minato-ku, Tokyo 108-0075 (JP)
(74) Representative: D Young & Co LLP

(57) **Abstract**

An image processing apparatus includes a setting section that sets a display region in an image region having a plurality of images lined up therein, on the basis of instruction information, a correction section that corrects the display region which is set by the setting section so as to reduce the number of images included in the display region, and a supply section that selects and supplies bit streams of the images included in the display region which is corrected by the correction section, from respective bit streams of the plurality of images which are encoded independently of each other.

## Description

### CROSS REFERENCE TO RELATED APPLICATIONS

This application claims the benefit of Japanese Priority Patent Application JP 2014-067812 filed March 28, 2014.

### BACKGROUND

The present disclosure relates to an image processing apparatus and method, and particularly relates to an image processing apparatus and method which are capable of suppressing an increase in the load of image delivery.

Hitherto, there have been systems in which contents (image data) such as moving images or still images are delivered from a server to a client. In such systems, generally, the load of the server has a tendency to increase, and thus a reduction in load is desired.

For example, a method is considered in which for the purpose of a reduction in the number of encoding processes having a large amount of calculation, an encode operation is performed as before during user interface (UI) rendering with respect to a real-time video encoder which constantly operates in the related art, whereas the operation is stopped during content display and delivery is performed through seamless connection with a content stream as it is (see, for example, Japanese Unexamined Patent Application Publication No. 2012-141921).

### SUMMARY

However, in recent years, a case has also been considered in which images of a plurality of contents are simultaneously displayed to a client. For example, it has been considered that images of a plurality of contents are simultaneously displayed to a client, using a user interface.

In that case, for example, a server decodes encoded data of each content, generates image data of a display image using obtained image data, decodes the image data of the display image, and delivers the decoded data as a bit stream to a client. Such a process is accompanied with encoding or decoding, and thus there is a concern that the load of the server may increase as the number of contents included in the display image increases.

It is desirable to suppress an increase in the load of image delivery.

Various respective aspects and features of the invention are defined in the appended claims.

According to an embodiment of the present disclosure, there is provided an image processing apparatus including: a setting section that sets a display region in an image region having a plurality of images lined up therein, on the basis of instruction information; a correction section that corrects the display region which is set by the setting section so as to reduce the number of images included in the display region; and a supply section that selects and supplies bit streams of the images included in the display region which is corrected by the correction section, from respective bit streams of the plurality of images which are encoded independently of each other.

The correction section may correct at least any one of a position, size, and aspect ratio of the display region.

The correction section may correct the display region which is set by the setting section so that a partial image included in the display region is located outside a region.

The correction section may correct the display region which is set by the setting section so that the images included in the display region become only a whole image.

The correction section may correct the display region which is set by the setting section so that the images included in the display region become only a single whole image.

The correction section corrects the display region which is set by the setting section when the single whole image occupies a predetermined ratio or more in the display region which is set by the setting section.

The correction section corrects the display region which is set by the setting section in a state where the instruction information is not given for a predetermined period.

The image processing apparatus may further include: a decoding section that decodes respective bit streams of a plurality of images when the plurality of images are included in the display region; a generation section that generates image data of the display region, using each piece of image data which is decoded and obtained by the decoding section; and an encoding section that encodes the image data of the display region which is generated by the generation section.

The image processing apparatus may further include a storage section that stores the respective bit streams of the plurality of images, and the supply section may read out and supply the bit streams of the images included in the display region which are corrected by the correction section, from the storage section.

The image processing apparatus may further include: a rendering parameter generation section that generates a rendering parameter for rendering the single partial image when the display region which is set by the setting section is constituted by a single partial image; and a rendering parameter supply section that supplies the rendering parameter which is generated by the rendering parameter generation section.

The image processing apparatus may further include an acquisition section that acquires the instruction information, and the setting section may set the display region on the basis of the instruction information which is acquired by the acquisition section.

The instruction information may be information indicating a user's operation which is input.

According to another embodiment of the present disclosure, there is provided an image processing method including: setting a display region in an image region having a plurality of images lined up therein, on the basis of instruction information; correcting the display region which is set so as to reduce the number of images included in the display region; and selecting and supplying bit streams of the images included in the display region which is corrected, from respective bit streams of the plurality of images which are encoded independently of each other.

In an embodiment of the present disclosure, a display region in an image region having a plurality of images lined up therein is set on the basis of instruction information, the display region which is set is corrected so as to reduce the number of images included in the display region, and bit streams of the images included in the display region which is corrected are selected and supplied from respective bit stream of the plurality of images which are encoded independently of each other.

According to the embodiments of the present disclosure, it is possible to deliver image data. Particularly, it is possible to suppress an increase in the load of image delivery.

### BRIEF DESCRIPTION OF THE DRAWINGS

Embodiments of the invention will now be described with reference to the accompanying drawings, throughout which like parts are referred to by like references, and in which:
Fig. 1 is a diagram illustrating an example of a GUI.
Fig. 2 is a diagram illustrating a main configuration example of an image delivery system.
Fig. 3 is a block diagram illustrating a main configuration example of a server.
Fig. 4 is a block diagram illustrating a main configuration example of a receiving device.
Fig. 5 is a diagram illustrating an example of an appearance of a change in a display region.
Fig. 6 is a diagram illustrating an example of the display region before change.
Fig. 7 is a diagram illustrating an example of the display region after change.
Fig. 8 is a diagram illustrating an example of correction of the display region.
Figs. 9A and 9B are diagrams illustrating an example of correction of the display region.
Fig. 10 is a flow diagram illustrating an example of a flow of an image delivery process.
Fig. 11 is a flow diagram illustrating an example of a flow of a bit stream sending-out process.
Fig. 12 is a block diagram illustrating another configuration example of the server.
Fig. 13 is a block diagram illustrating another configuration example of the receiving device.
Fig. 14 is a flow diagram illustrating another example of the flow of the bit stream sending-out process.
Fig. 15 is a flow diagram illustrating an example of a flow of an image display process.
Fig. 16 is a diagram illustrating an example of correction of the display region.
Fig. 17 is a diagram illustrating a main configuration example of a television broadcasting moving image browsing system.
Fig. 18 is a diagram illustrating a main configuration example of a monitoring camera system.
Fig. 19 is a block diagram illustrating a main configuration example of a computer.

### DETAILED DESCRIPTION OF EMBODIMENTS

Hereinafter, a mode for carrying out the present disclosure (hereinafter, referred to as an embodiment) will be described. Meanwhile, the description will be given in the following order.
1. First Embodiment (Image Delivery System)
2. Second Embodiment (Image Delivery System)
3. Third Embodiment (Another Example of Correction)
4. Fourth Embodiment (Other Systems)
5. Fifth Embodiment (Computer)

### <1. First Embodiment>

### <Moving Image Display>

As a system for displaying and browsing a plurality of moving image contents on a server in a state of being arranged side by side, a method of receiving a moving image stream and a user interface (UI) rendering command to perform rendering on a client and a method of performing rendering on a server and then delivering a final display screen as one moving image bit stream are considered.

The method of performing rendering on a client is generally performed using a Web browser or the like. A server delivers only a moving image content stream or UI screen arrangement configuration, and a client is in charge of the rendering of a screen. In this case, when there are many constituent moving images, many communication bands are desired, and thus there is a concern that the load of a process of decoding and rendering a plurality of moving images on a client may become very heavy.

On the other hand, in a method of decoding and rendering a moving image on a server, encoding a rendered screen in real time so as to be changed into one moving image stream and delivering the resultant, there is an advantage in that a main process of a client may just continue to decode one moving image constantly, the number of portions depending on the processing capability of the client is small, and the configuration of an application on the client is achieved with a simple configuration close to a simple streaming player.

In a use case where a recent smartphone or the like serves as a client, when a case is considered in which a communication band is not taken to that extent, and the processing capability of decoding and rendering is not also sufficient, this is an effective system. However, as the process of the client becomes simpler, more processes such as decoding, rendering and real-time encoding are generated at the server side, which leads to a problem of a load on the server side.

Japanese Unexamined Patent Application Publication No. 2012-141921 discloses a method in which for the purpose of a reduction in the number of encoding processes having a large amount of calculation, an encoding operation is performed as before during UI rendering with respect to a real-time video encoder which constantly operates in the related art, whereas a server load is reduced by stopping the operation during content display and performing delivery through seamless connection with a content stream as it is.

As a UI having a higher freedom of expression, a UI is considered which is capable of being freely enlarged, reduced and moved by a user's operation while all the images lined up in a surface are displayed as moving images. Unlike a simple UI, in which the reproduction is started when selected, moving images are continuously reproduced, so that browsing may be done as if a user freely moves around the inside of a virtual large screen arranging an image group.

In such an example, since a user can perform a free operation, the arrangement of each image on a screen has a high degree of freedom, and thus the state of arrangement capable of being switched to a stream of contents becomes extremely lower.

Unlike an example disclosed in Japanese Unexamined Patent Application Publication No. 2012-141921 in which when a user selects one moving image the reproduction of the moving image is started, since an enlargement ratio or the arrangement can be adjusted by a user's operation, one moving image is seldom set to be in a state of 100% exactly.

For this reason, a video encoder typically continues to operate, and thus there is a concern that the load of a server may remain high.

### <User Interface>

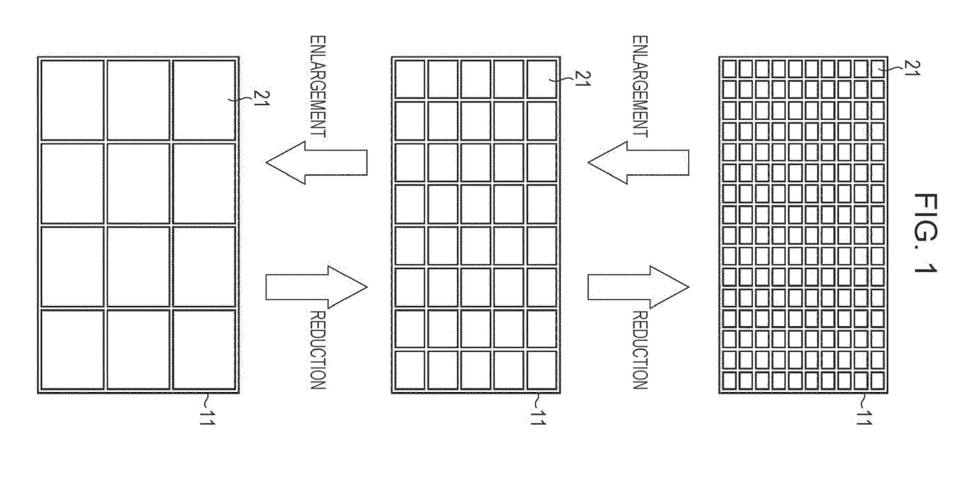

Fig. 1 is a diagram illustrating an example of a moving image display user interface (UI) screen lined up in a surface shape. In a UI screen 11 shown in Fig. 1, images (which may be moving images and may be still images) 21 of contents capable of being delivered are disposed on a predetermined surface so as to be lined up in a tile shape (for example, in an array shape). This surface may be a planar surface and may be a curved surface.

For example, an image group lined up in a tile shape is enlarged and displayed by a user performing an enlargement operation. In Fig. 1, the display state of the UI screen 11 is shown in three stages. Among the stages, the topmost UI screen 11 shows a widest-angle state (state in which a widest range is displayed), and the bottommost UI screen 11 shows a narrowest-angle state (state in which a narrowest range is displayed).

Each of the images 21 is displayed to have a larger size by the user's enlargement operation, and the number of images within a display region becomes smaller to that extent. That is, a range to be displayed becomes narrower (example located lower in Fig. 1). Reversely, when a user performs a reduction operation, each of the images 21 is displayed to have a smaller size, and the number of images within the display region becomes larger to that extent. That is, a range to be displayed becomes wider (example located higher in Fig. 1).

A user can perform parallel movement from right to left or up and down in addition to enlargement and reduction, and can have an overhead view, take an in-depth look at enlarged contents of interest, or search for contents desired to be viewed. The contents are arbitrary, but a moving image and the like, such as, for example, accumulated moving image contents or a television broadcasting image uploaded to a server by a user, which continue to flow in real time are considered.

### <Correction of Display Region>

In such a UI, in order to suppress an increase in the load of a server, a display region in an image region having a plurality of images lined up therein is set on the basis of instruction information, the set display region is corrected so as to reduce the number of images included in the display region, and a bit stream of an image included in the corrected display region is selected and supplied from each bit stream of a plurality of images which are encoded independently of each other.

In this manner, since the number of bit streams to be delivered can be reduced, it is possible to suppress an increase in the load of image delivery in a server.

### <Image Delivery System>

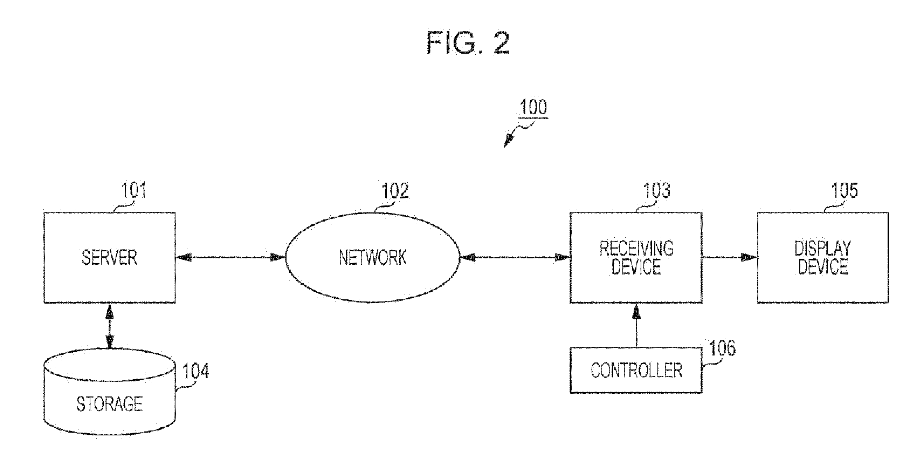

Fig. 2 is a block diagram illustrating a main configuration example of an image delivery system which is an embodiment of a system including an image processing apparatus to which the present disclosure is applied.

An image delivery system 100 shown in Fig. 2 is a system for a server 101 to deliver an image to a receiving device 103 which is connected through a network 102. The server 101 transmits content data for delivery which is stored in a storage 104 to the receiving device 103 which is a client through the network 102.

In that case, the server 101 provides the UI as described with reference to Fig. 1 to the receiving device 103. Specifically, the server 101 generates an image of a portion (also called a display region) in which the UI as described with reference to Fig. 1 is displayed, using content data which is read out from the storage 104, and supplies the image data to the receiving device 103. In addition, the server 101 accepts instruction information for the display region of the UI which is transmitted from the receiving device 103, and generates an image of the display region on the basis of the instruction information.

The network 102 is any communication medium. The network 102 may be one network, and may be formed by a plurality of networks. The network 102 may be, for example, the Internet, a public telephone line network, a LAN (Local Area Network), and be a combination thereof. Naturally, the network 102 may include networks other than these above. Further, the network 102 may be a cable communication medium, a radio communication medium, and be a combination thereof.

The receiving device 103 receives image data of the display region of the UI which is transmitted from the server 101. As shown in Fig. 1, a display device 105 that displays an image is connected to the receiving device 103. The receiving device 103 causes the display device 105 to display the image of the display region of the UI using the received image data.

In addition, the receiving device 103 is provided with a controller 106 that receives a user's operation. The receiving device 103 acquires control information corresponding to the user's operation which is received in the controller 106 from the controller 106, and performs a process based on the control information. For example, when the user's operation which is received in the controller 106 is an instruction for the display region of the UI, information indicating the user's operation (hereinafter, simply called the user's operation, and also called instruction information) is supplied to the server 101. The server 101 performs the setting of the display region on the basis of the user's operation (instruction information).

The storage 104 has any recording medium such as, for example, a hard disk, and stores data (content data) of contents composed of images, voices and the like. The content data is constituted by any data. For example, the content data includes image data, voice data and the like. The storage 104 stores a plurality of pieces of content data. The number thereof is arbitrary, but the usefulness of a service which is provided by the server 101 increases as the number thereof becomes larger. In order to more effectively use a storage area of the storage 104, each piece of content data is encoded. This encoding method is arbitrary.

This content is a content for delivery which is delivered to the receiving device 103 by the server 101. Meanwhile, the image of the content may be a moving image, and may be a still image.

The display device 105 is connected to the receiving device 103, and displays an image of image data which is supplied from the receiving device 103. For example, the display device 105 acquires image data of the display region of the UI which is supplied from the receiving device 103, and displays an image of the display region.

The controller 106 has an input section such as, for example, a button or a switch, and receives a user's operation for the input section. When the user's operation is received, the controller 106 supplies control information corresponding to the received user's operation to the receiving device 103. The receiving device 103 receives the control information which is supplied from the controller 106, and performs a process based on the control information.

Meanwhile, in Fig. 2, the server 101 to the controller 106 are shown one by one, but the numbers of some or all of these components may be two or more.

In addition, the storage 104 may be configured to be built into the server 101 (configured to be formed as a component of the server 101). In addition, the storage 104 may be configured to be connected to the server 101 through the network 102.

In addition, the display device 105 may be configured to be built into the receiving device 103 (configured to be formed as a component of the receiving device 103). In addition, the display device 105 may be configured to be connected to the receiving device 103 through the network 102.

In addition, the controller 106 may be configured to be connected to the receiving device 103 by cable communication, and to be connected to the receiving device 103 by radio communication. In addition, the controller 106 may be configured to be built into the receiving device 103 (configured to be formed as a component of the receiving device 103). In addition, the controller 106 may be configured to be connected to the receiving device 103 through the network 102.

### <Server>

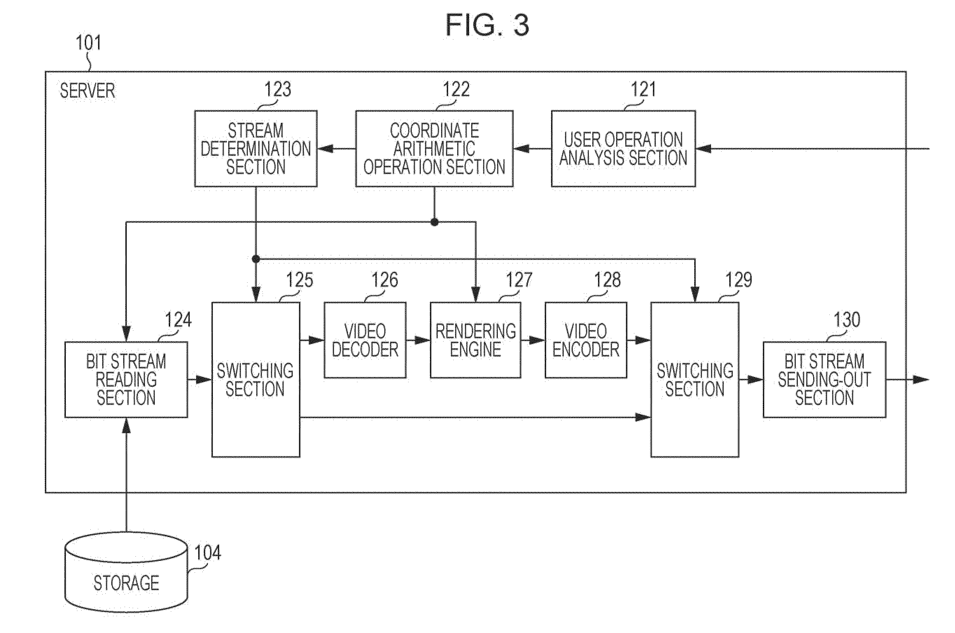

Fig. 3 is a block diagram illustrating a main configuration example of the server 101. As shown in Fig. 3, the server 101 includes a user operation analysis section 121, a coordinate arithmetic operation section 122, a stream determination section 123, a bit stream reading section 124, a switching section 125, a video decoder 126, a rendering engine 127, a video encoder 128, a switching section 129, and a bit stream sending-out section 130.

The user operation analysis section 121 acquires a user's operation (instruction information for the display region of the UI) which is supplied from the receiving device 103, and analyzes an instruction (such as, for example, enlargement, reduction, movement, or deformation of the display region) for the display region of the UI indicated by the user's operation. The user operation analysis section 121 supplies the analysis result to the coordinate arithmetic operation section 122.
The coordinate arithmetic operation section 122 obtains coordinates of the display region on the basis of the analysis result which is supplied from the user operation analysis section 121. That is, the coordinate arithmetic operation section 122 obtains the position, size, shape and the like of the display region after updating according to the user's instruction. The coordinate arithmetic operation section 122 supplies information indicating the obtained coordinates of the display region to the stream determination section 123, the bit stream reading section 124, the rendering engine 127, and the like.

The stream determination section 123 determines whether a process such as decoding is desired for generating the image of the display region on the basis of the information indicating the coordinates of the display region which are supplied from the coordinate arithmetic operation section 122, and controls the switching section 125 or the switching section 129 in accordance with the determination result.

The bit stream reading section 124 reads out a bit stream of the UI of contents included in the display region obtained by the coordinate arithmetic operation section 122, from the storage 104, and supplied the bit stream to the switching section 125.

The switching section 125 supplies the bit stream which is supplied from the bit stream reading section 124 to an output destination determined by the stream determination section 123. For example, when it is determined by the stream determination section 123 that a process such as decoding is desired for generating the image of the display region, the bit stream which is supplied from the bit stream reading section 124 is supplied to the video decoder 126. For example, when a plurality of contents are included in the display region, images of the plurality of contents have to be converted into one bit stream collectively in order to generate the image of the display region, and thus the stream determination section 123 determines that a process such as decoding is desired for generating the image of the display region.

In addition, for example, when it is determined by the stream determination section 123 that a process such as decoding is not desired for generating the image of the display region, the bit stream which is supplied from the bit stream reading section 124 is supplied to the switching section 129. For example, when the display region is exactly formed by the whole image of one content, image data of the content may be provided as image data of the display region, and thus the stream determination section 123 determines that a process such as decoding is not desired for generating the image of the display region.

The video decoder 126 decodes a bit stream of a content which is supplied through the switching section 125. Insofar as the bit stream of the content can be decoded correctly, this decoding method may any method. The video decoder 126 supplies the decoded content data to the rendering engine 127.

The rendering engine 127 generates the image of the display region using the image data of the content which is generated in the video decoder 126. For example, when images of a plurality of contents are included in the display region, the rendering engine 127 generates the image of the display region using the entire image data of each of the contents. The rendering engine 127 supplies the generated image data of the image of the display region to the video encoder 128.

The video encoder 128 encodes the image data of the display region which is supplied from the rendering engine 127, and converts the encoded image data into one bit stream. The video encoder 128 supplies the one bit stream to the switching section 129.

The switching section 129 supplies the bit stream which is supplied from the video encoder 128 or the switching section 125 to the bit stream sending-out section 130 in accordance with control of the stream determination section 123.

The bit stream sending-out section 130 supplies the bit stream which is supplied through the switching section 129 to the receiving device 103 through the network 102.

The present disclosure has a feature in which a flow of signals of the video decoder 126, the rendering engine 127, and the video encoder 128 is omitted, and a path of a direct shortcut from the bit stream reading section 124 to the bit stream sending-out section 130 is present. Whether passing through the shortcut path is performed by the stream determination section 123. The time when a signal flows directly from the bit stream reading section 124 through the shortcut to the bit stream sending-out section 130 is the time when a display screen is displayed 100% of one content screen.

### <Receiving Device>

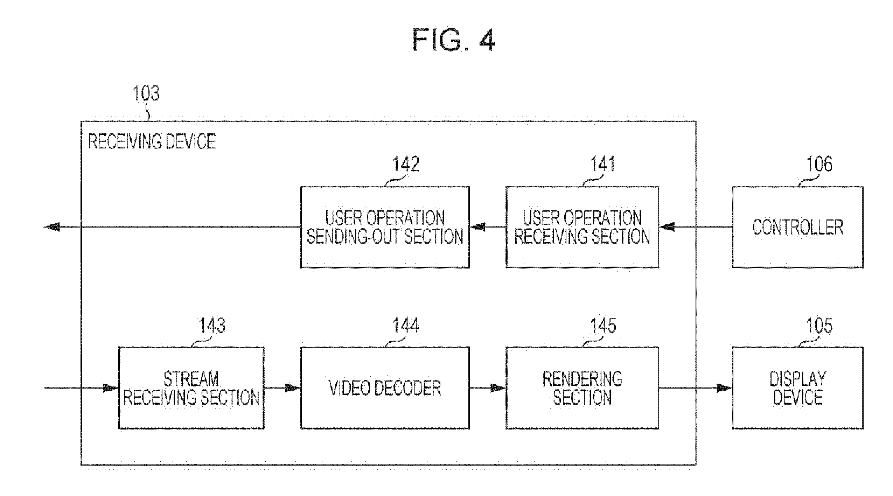

Fig. 4 is a block diagram illustrating a main configuration example of the receiving device 103. As shown in Fig. 4, the receiving device 103 includes a user operation receiving section 141, a user operation sending-out section 142, a stream receiving section 143, a video decoder 144, and a rendering section 145.

The user operation receiving section 141 receives a user's operation which is transmitted from the controller 106. The user operation receiving section 141 supplies the user's operation to the user operation sending-out section 142.

The user operation sending-out section 142 transmits the user's operation which is supplied from the user operation receiving section 141, to the server 101 through the network 102.

The stream receiving section 143 receives a bit stream which is transmitted from the server 101. The stream receiving section 143 supplies the received bit stream to the video decoder 144.

The video decoder 144 decodes the bit stream which is supplied from the stream receiving section 143, and obtains image data (decoded image data) of the display region. The video decoder 144 supplies the image data of the display region to the rendering section 145.

The rendering section 145 renders the image of the display region using the supplied image data of the display region, and causes the display device 105 to display the resultant.

### <Correction of Display Region>

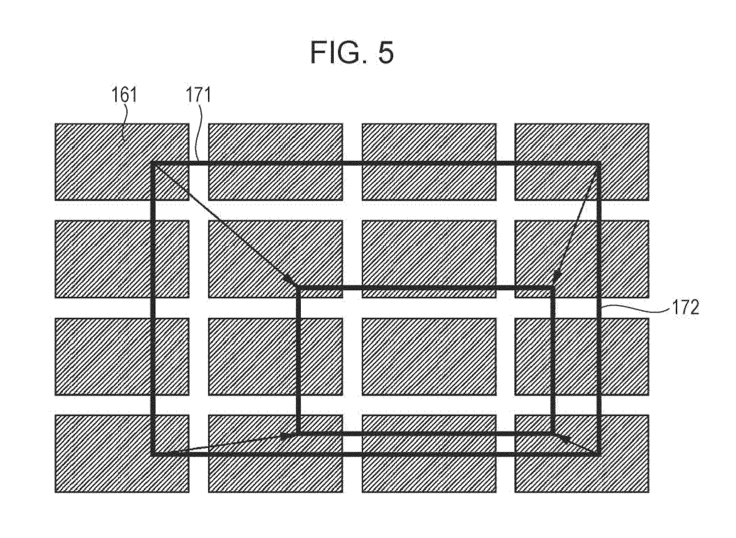

Fig. 5 shows moving images (UI) which are virtually lined up in a tile shape, and image frames (display regions) capable of being enlarged and reduced by a user's operation. As shown in Fig. 5, in the UI, images 161 of contents shown by a diagonal rectangle are disposed so as to be lined up in a surface shape. In Fig. 5, one image on the upper left side is assigned a sign, but this sign indicates each image.

An image frame 171 shown in Fig. 5 indicates a display region in a certain state. An image frame 172 indicates a display region in a state where the display region in a state of the image frame 171 is updated by a user's operation or the like.

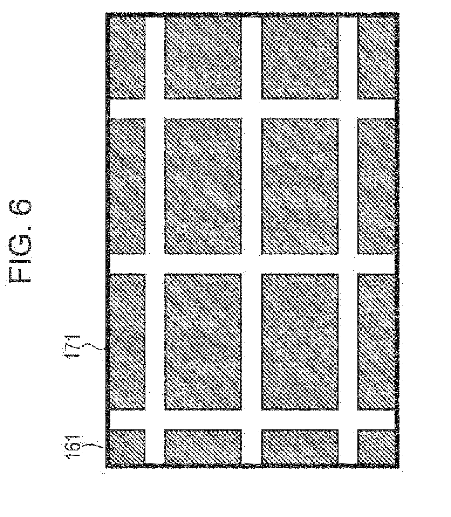

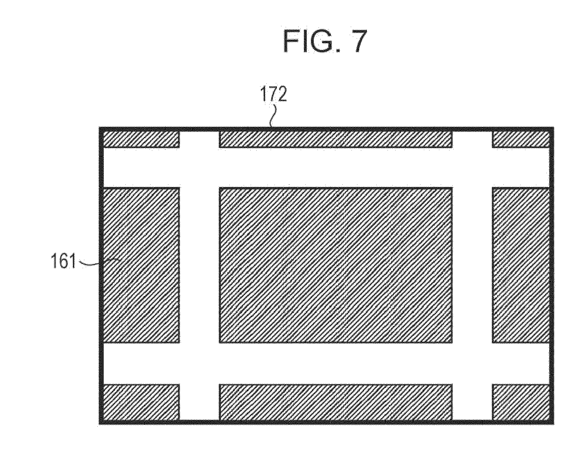

The display size of the display region is constant in the display device 105, and thus when the display region is in a state of the image frame 171, the display region is displayed, for example, as shown in Fig. 6. In addition, when the display region is in a state of the image frame 172, the display region is displayed, for example, as shown in Fig. 7. That is, when the display region is in a state of the image frame 172, the range of the display region becomes narrower, and an enlargement ratio becomes larger to that extent.

Basically, the size or position of the image frame is specified through a controller by a user. However, in the present disclosure, when a certain condition is satisfied, the size or position is automatically corrected irrespective of a user's operation. The condition is arbitrary, but may be, for example, a condition in which "a user does not transmit a command, and the percentage of one moving image within a screen is equal to or greater than 80%".

A state where a user does not transmit a command refers to a state equivalent to that when any controller button is not pressed down, that is, a hand is set free. The reason for which this condition is desired is because when automatic correction is entered at the time of user's performing some kind of operation, there is a concern that a user may feel like a screen is changed contrary to the operation of the controller. A threshold at which the proportion of the screen is 80% is merely illustrative. Insofar as a moving image attracting attention in a screen is obvious, and the threshold is a level capable of identifying whether being in a state of being determined that viewing the moving image is a main purpose, this threshold is arbitrary.

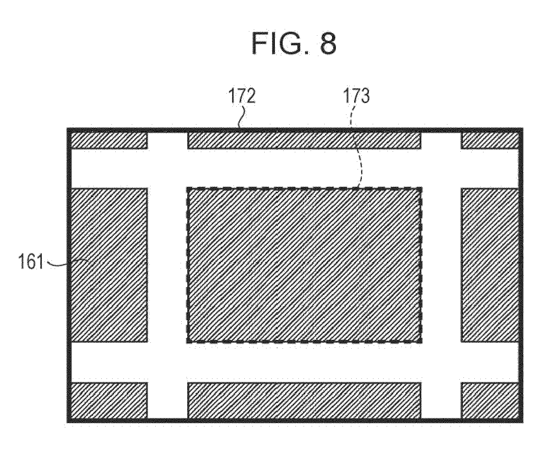

A target coordinate of automatic correction is a state where a main moving image is displayed (100%) in the entire display region. For example, in the case of the state of Fig. 6, the percentage of each image 161 in the display region is not large, but in the case of the state of Fig. 7, the percentage of the central image 161 in the display region is large. When the proportion is assumed to exceed the threshold, the display region is corrected (enlarged) so that the central image 161 is displayed in the entire display region. That is, correction is performed so that a portion surrounded by a dotted line 173 of Fig. 8 becomes a display region.

Meanwhile, at the time of the correction, instantaneous transition to a state after correction may be performed, and smooth transition may be performed so as to be capable of being followed by the eyes over several frames to several seconds.

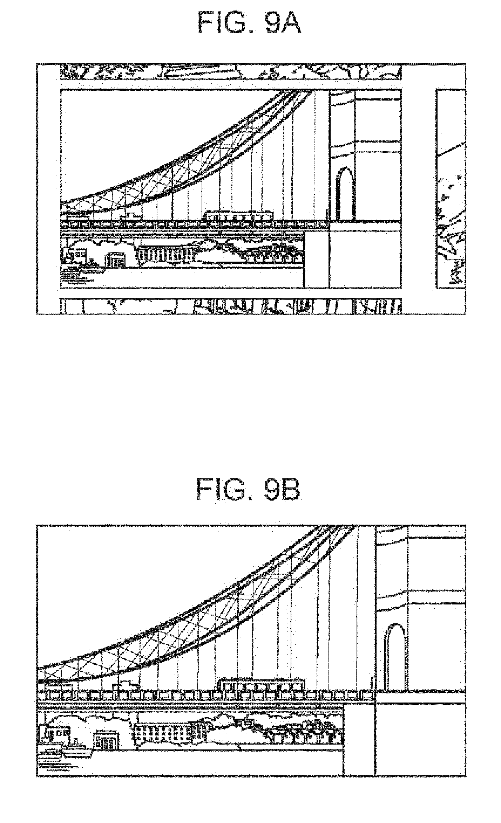

Figs. 9A and 9B show appearances of images of the display region before and after such correction of the display region. Fig. 9A shows a state before the correction. In this state, a portion (partial image) of adjacent images is included in the display region, in addition to the central image. Therefore, in this case, in order to provide bit streams of images of the display region to the receiving device 103, the server 101 reads out and decodes a bit stream of each image, synthesizes the resultants to generate an image of the display region, and has to encode and transmit the image of the display region, which leads to a large load.

On the other hand, Fig. 9B shows a state after the correction. In this state, the display region is constituted by one whole image. Therefore, in this case, the server 101 may provide the bit stream of the content, as it is, to the receiving device 103 as the bit stream of the image of the display region. That is, it is possible to omit normal processes of decoding, rendering and encoding. Therefore, the server 101 can suppress an increase in the load of image delivery.

For example, as shown in Fig. 5, such correction of the display region may be performed by correcting at least any one of the position, the size, and the aspect ratio. It is possible to reduce the number of images included in the display region by moving the position of the display region, or changing the size or the aspect ratio.

In addition, for example, as shown in Figs. 9A and 9B, such correction of the display region may be performed so that the partial image included in the display region is located outside the region. In other words, the correction may be performed so that the images included in the display region become only the whole image.

As described above, when the partial image is included in the display region, in order to generate the image of the display region, the bit stream of the whole image of the content including the partial image is read out and decoded, and the partial image has to be extracted from the whole image. Even when the image of the display region is generated in a client, the bit stream of the whole image has to be read out and supplied to the client. That is, in the delivery of the partial image, since a desired load is large compared to the size of the image to be displayed, the delivery of the partial image is inefficient. Consequently, as described above, the partial image included in the display region is located outside the region, thereby allowing an increase in the load of image delivery to be suppressed.

In addition, for example, as shown in Fig. 8, such correction of the display region may be performed so that the image included in the display region becomes only a single whole image. By performing such correction, as described above, since the bit stream of the content may be transmitted with no change, it is possible to omit a process such encoding or decoding, and to reduce a load.

In addition, such correction of the display region may be performed when the single whole image occupies a predetermined ratio or more in the display region before the correction. In this manner, the magnitude of the display size of the image is set to a threshold. Therefore, a case (that is, correction against a user's intention) where an image to which a user pays obvious attention is located outside the display region can be generated less easily by the correction, and a reduction in the operability of a user interface can be suppressed.

In addition, such correction of the display region may be performed in a state where the user's operation is not performed. When such correction is performed during the user's operation, there is a concern that the display region may cause behavior (such as enlargement, reduction, movement or deformation) against a user's intention. Therefore, only in a state where the user's operation is not performed, such correction of the display region is performed, and thus the behavior against a user's intention is suppressed, thereby allowing a reduction in the operability of a user interface to be suppressed. Meanwhile, in a state where the user's operation is not performed, an instant at which instruction information is not supplied to the server 101 may be included. However, in reality, there may be a concern such as a time lag in which it is difficult to perform control, and thus the instruction information may not be given for a predetermined period.

### <Flow of Image Delivery Process>

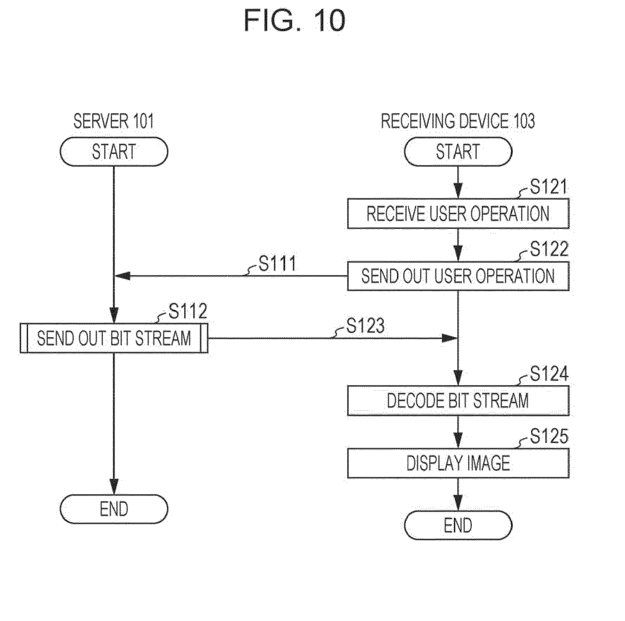

Next, processes which are executed by each device of the aforementioned image delivery system 100 will be described. Initially, an example of a flow of an image delivery process which is executed by the server 101 and the receiving device 103 of the image delivery system 100 will be described with reference to a flow diagram of Fig. 10.

When the image delivery process is started, the user operation receiving section 141 of the receiving device 103 receives a user's operation in step S121.

In step S122, the user operation sending-out section 142 sends out the user's operation which is received by the process of step S121 to the server 101 through the network 102.

In step S111, the user operation analysis section 121 of the server 101 receives this user's operation.

In step S112, the server 101 sends out a bit stream of the image of the display region to the receiving device 103 in accordance with the user's operation.

In step S123, the stream receiving section 143 of the receiving device 103 receives the bit stream.

In step S124, the video decoder 144 decodes the bit stream which is received in step S123.

In step S125, the rendering section 145 generates an image of the display region using image data of the display region obtained by decoding the bit stream through the process of step S124, and causes the display device 105 to display the generated image.

When the process of step S125 is terminated, the image delivery process is terminated.

### <Flow of Bit Stream Sending-out Process>

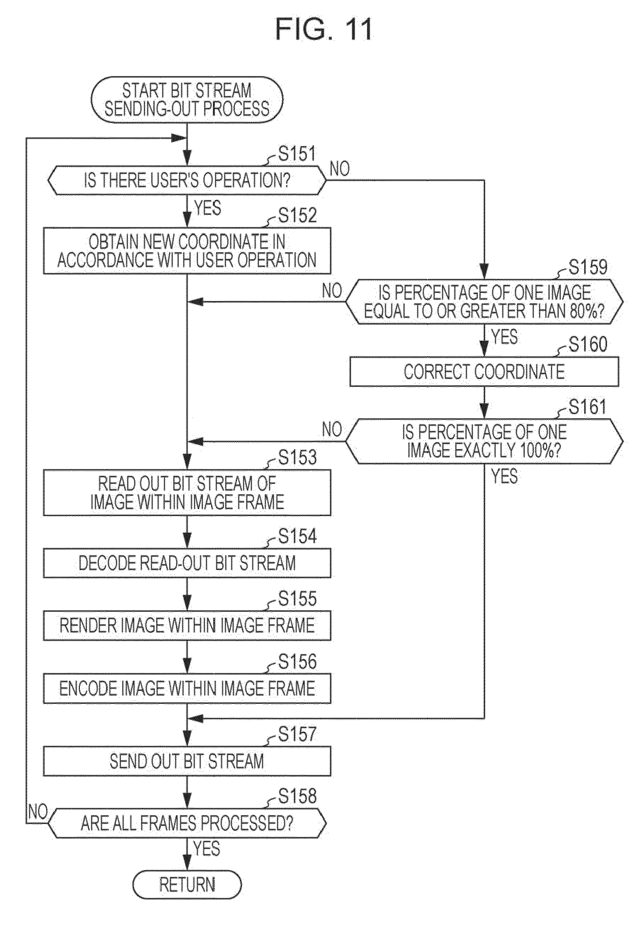

Next, an example of a flow of a bit stream sending-out process which is executed in step S112 of Fig. 10 will be described with reference to a flow diagram of Fig. 11.

When the bit stream sending-out process is started, in step S151, the user operation analysis section 121 analyzes the user's operation which is received in step S111 (Fig. 10), and determines whether there is a user's operation for the display region.

Correction is not performed during the user's operation, and thus when it is determined that there is a user's operation, the process proceeds to step S152. In this case, the stream determination section 123 causes the switching section 125 and the switching section 129 to select a path of the video decoder 126 to the video encoder 128. That is, the bit stream which is read by the bit stream reading section 124 passes through the video decoder 126 to the video encoder 128.

In step S152, the coordinate arithmetic operation section 122 obtains new coordinates (position, size, shape and the like) of the display region in accordance with the user's operation.

In step S153, the bit stream reading section 124 reads out a bit stream of an image (content) located within the display region of the new coordinates from the storage 104, on the basis of the new coordinates of the display region which is obtained in step S152.

In step S154, the video decoder 126 decodes the bit stream which is read out in step S153.

In step S155, the rendering engine 127 generates an image of the display region using the image data which is decoded and obtained in step S154.

In step S156, the video encoder 128 encodes the image data of the image within the display region which is generated in step S155, and generates a bit stream.

In step S157, the bit stream sending-out section 130 sends out the bit stream which is generated in step S156 to the receiving device 103 through the network 102.

In step S158, the server 101 determines whether all the frames of the bit stream are processed. When it is determined that unprocessed frames are present, the process returns to step S151, and the subsequent processes are repeated. In addition, in step S158, when it is determined that all the frames are processed, the bit stream sending-out process is terminated, and the process returns to Fig. 10.

In addition, in step S151, when it is determined that there is no user's operation, the process proceeds to step S 159.

In step S159, the stream determination section 123 determines whether the percentage of one image within the display region is equal to or greater than 80%. When it is determined that an image occupying more than 80% of the display region is not present, the process returns to step S153, and the subsequent processes are repeated.

In addition, in step S159, when it is determined that the image occupying equal to or greater than 80% of the display region is present, the process proceeds to step S160.

In step S160, the coordinate arithmetic operation section 122 corrects the coordinates of the display region as described above, for example, with reference to Figs. 5 to 9B, and the like.

In step S161, the stream determination section 123 determines whether the percentage of one image within the display region is exactly 100%. When it is determined that one image occupying equal to or greater than 80% and less than 100% of the display region is present, the process returns to step S153, and the subsequent processes are repeated. During transition from the state before correction to the state after correction, the process is performed in this manner.

In step S161, when it is determined that the display region is constituted by one whole image, the process returns to step S157, and the subsequent processes are repeated. In the state after correction, the process is performed in this manner. That is, when an image of one content is displayed as the image of the display region, the processes of step S154 to step S156 are omitted, and the bit stream of the content is sent out to the receiving device 103 as it is.

Each of the processes is performed as described above, and thus the server 101 can suppress an increase in the load of image delivery.

When the automatic adjustment of the display coordinates is terminated, and one moving image is displayed at 100% in a screen, it is possible to omit processes of decoding, rendering and re-encoding on the server side, and to greatly reduce the amount of calculation in a server. As compared to the time when contents desired to be viewed while performing enlargement and reduction operations are searched for during a user's operation, it is considered the time when one moving image is deliberately viewed is longer, and thus the average of a load per user is maintained in a low state from the total load in which a plurality of users are processed.

Further, since processes such as decoding, enlargement/reduction, and re-encoding are accompanied with a deterioration in image quality, an improvement in image quality in a screen browsed by a user can be anticipated by not passing through this path.

In a screen display in a determination criterion where the automatic adjustment is performed, for example, a condition which is fit for "the percentage of one image within a screen is equal to or greater than 80%", when there is no automatic adjustment, the remaining 20% except for a moving image of interest is a small proportion of the screen, has no meaning as for a user, and is portions which are not positively desired to be displayed. By the action of an automatic adjustment mechanism, a moving image desired to be viewed can be perfectly displayed at 100% in a screen by a coarse operation, a user can also expect an improvement in operational feeling.

### <2. Second Embodiment>

### <Enlargement>

Meanwhile, an image of one content may be able to be enlarged until the image becomes larger than the display region (that is, until the image becomes more than 100%).

In this case, in the server 101, when an enlargement process is entirely performed, decoding, enlargement rendering, and encoding processes are performed in spite of one image of the content, and thus the load of the server 101 is set to be in a high state.

Consequently, enlargement up to the size (that is, up to 100%) of the display region may be performed in the server 101, and enlargement of more than the display region (more than 100%) may be performed in the receiving device 103.

In that case, the server 101 can send out a bit stream in a state where the display region is constituted by the whole image of one content. That is, the server 101 can send out the bit stream of the content as the bit stream of the image of the display region. Therefore, the server 101 can omit processes such as decoding and encoding as is the case with the first embodiment, and can suppress an increase in the load of image delivery.

The server 101 then generates a rendering parameter for giving an instruction for enlargement of more than the display region, and sends out the parameter to the receiving device 103. The receiving device 103 enlarges the image of the content which is supplied from the server 101 to more than the display region, as specified by the rendering parameter.

In this manner, a partial image of one content is displayed on the display device 105 as the image of the display region.

### <Server>

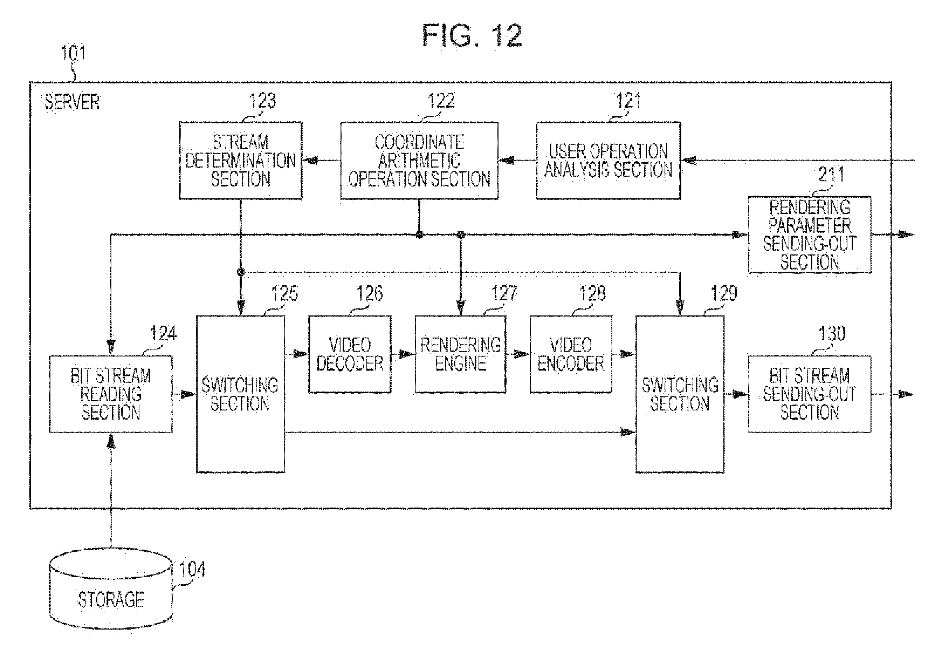

Fig. 12 is a block diagram illustrating a main configuration example of the server 101 in that case. As shown in Fig. 12, in this case, the server 101 includes a rendering parameter sending-out section 211, in addition to the configuration shown in Fig. 3.

The coordinate arithmetic operation section 122 generates a rendering parameter for specifying an enlargement method (magnification, portion to be displayed, or the like) of a portion in which the image of one content is enlarged to more than the display region, and supplies the parameter to the rendering parameter sending-out section 211.

The rendering parameter sending-out section 211 sends out the rendering parameter which is supplied from the coordinate arithmetic operation section 122 to the receiving device 103 through the network 102.

### <Receiving Device>

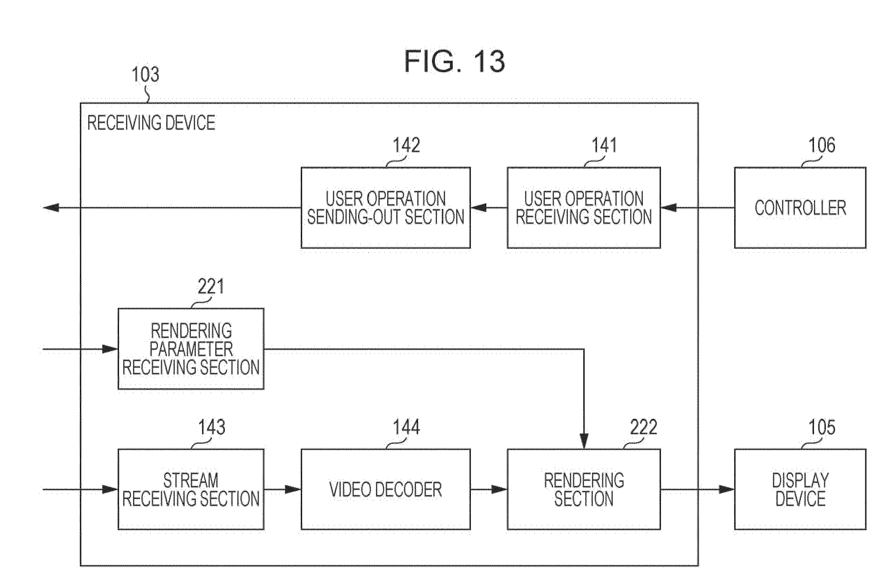

Fig. 13 is a block diagram illustrating a main configuration example of the receiving device 103 in this case. As shown in Fig. 13, the receiving device 103 in this case includes a rendering parameter receiving section 221, in addition the configuration of Fig. 4. In addition, the receiving device 103 in this case includes a rendering section 222 instead of the rendering section 145 of Fig. 4.

The rendering parameter receiving section 221 receives the rendering parameter which is transmitted from the server 101. The rendering parameter receiving section 221 supplies the received rendering parameter to the rendering section 222.

The rendering section 222 enlarges the image of the image data which is supplied from the video decoder 144 so as to be larger than the display region, on the basis of the rendering parameter which is supplied from the rendering parameter receiving section 221. That is, the partial image of the image data which is supplied from the video decoder 144 is rendered as the image of the display region, and the display device 105 is caused to display the rendered image.

### <Flow of Bit Stream Sending-out Process>

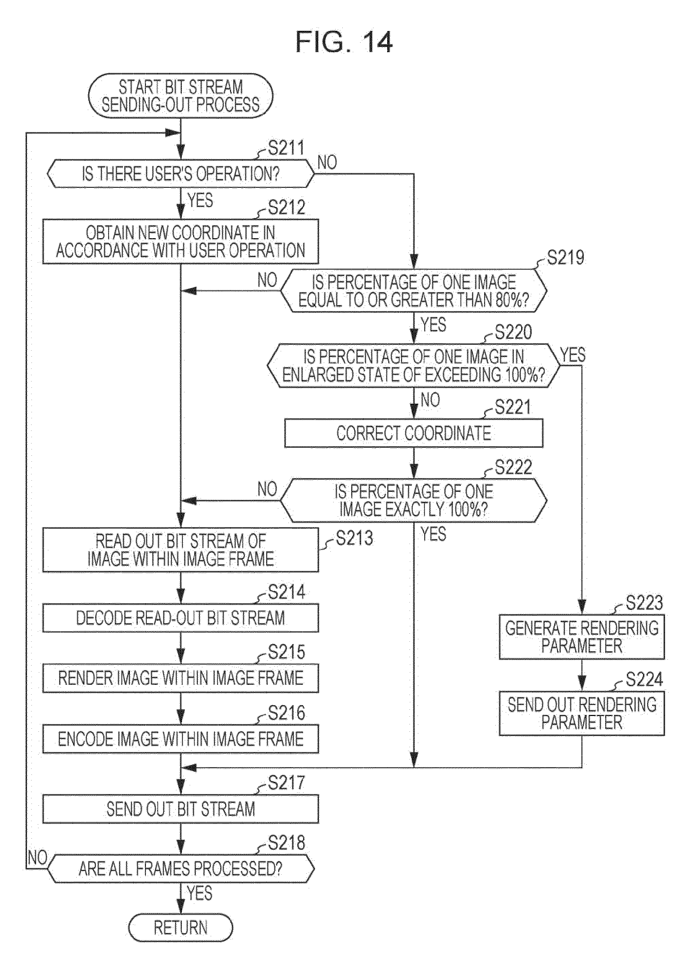

Next, an example of a flow of a bit stream sending-out process in this case will be described with reference to a flow diagram of Fig. 14.

Respective processes of step S211 to step S219 are executed similarly to the respective processes of step S151 to step S159 in Fig. 11.

In step S220, the coordinate arithmetic operation section 122 determines whether one image is in an enlarged state where the percentage of the image in the display region exceeds 100%.

When it is determined that the image is not in a state where the percentage does not exceed 100%, the process proceeds to step S222. A process of step S222 is performed similarly to step S161 of Fig. 11. That is, when the image of one content is not enlarged so as to be larger than the display region, the process is performed as is the case with the first embodiment.

In step S220, when it is determined that one image is in an enlarged state where the percentage of the image in the display region exceeds 100%, the process proceeds to step S223.

In step S223, the coordinate arithmetic operation section 122 generates a rendering parameter for specifying an enlargement method without enlarging more than that.

In step S224, the rendering parameter sending-out section 211 sends out the rendering parameter which is generated in step S223 to the receiving device 103.

When the process of step S224 is terminated, the process returns to step S217, and the subsequent processes are repeated.

### <Flow of Image Display Process>

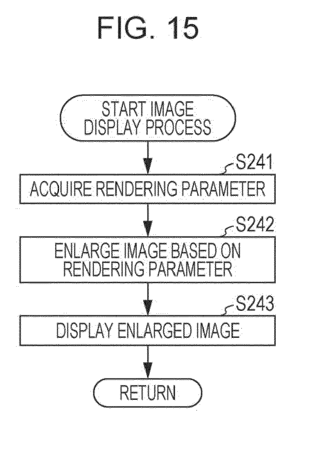

Next, an example of a flow of an image display process which is performed by the receiving device 103 will be described with reference to a flow diagram of Fig. 15.

When the image display process is started, the rendering parameter receiving section 221 acquires the rendering parameter which is supplied from the server 101 in step S241.

In step S242, the rendering section 222 enlarges an image of image data which is decoded and obtained by the video decoder 144, on the basis of the rendering parameter which is acquired in step S241. That is, the image is enlarged larger than the display region.

In step S243, the rendering section 222 causes the display device 105 to display the enlarged image (partial image of the enlarged image having the same size of that of the display region) which is generated in step S242, on the basis of the rendering parameter which is acquired in step S241.

Each of the processes is executed as described above, and thus even when the image of one content is enlarged so as to be larger than the display region, the server 101 can suppress an increase in the load of image delivery.

### <3. Third Embodiment>

### <Another Example of Correction>

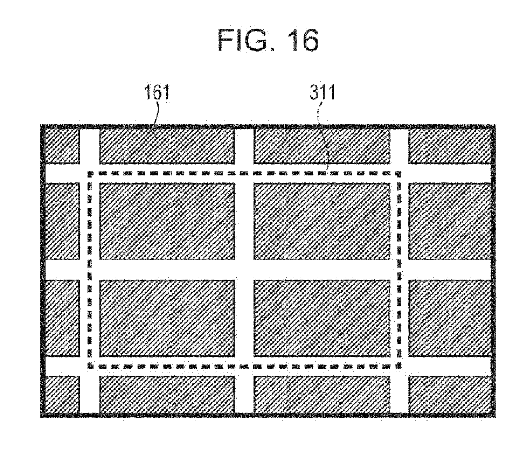

Meanwhile, as stated above, a case has been described in which the display region is corrected so that the image of one content is displayed, but the display region may be corrected so images of a plurality of contents are displayed, without being limited thereto. For example, in a state where the display region is as shown in Fig. 16, as shown by a dotted line 311, the display region may be corrected so that the whole image of a content of 2x2 is displayed.

In the example of Fig. 16, sixteen images inclusive of only a portion of images displayed before correction are included in a display screen, but the images have four screens after correction, and the number of decoding processes is reduced to a quarter from 16 to 4.

Further, when the bit stream of the content is prepared in advance as a moving image compressed by HEVC (High Efficiency Video Coding) of a half of lengthwise and crosswise resolutions, a content moving image can be reconfigured as one stream lined up in a tile shape using a tile function of a HEVC standard without performing a decoding process. In this case, the process in the server 101 can be performed with a very small load.

### <4. Fourth Embodiment>

### <Other Systems>

As stated above, an example of the image delivery system 100 shown in Fig. 2 has been described, but when the system is a system for transmitting and receiving an image, the present disclosure can also be applied to any system.

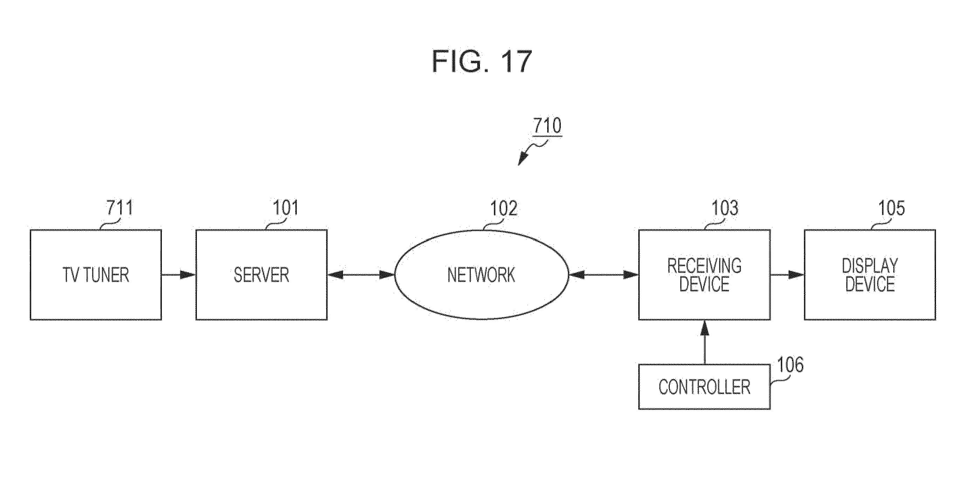

For example, the present disclosure can also be applied to a television broadcasting moving image browsing system as shown in Fig. 17. A television broadcasting moving image browsing system 710 as shown in Fig. 17 includes a TV tuner 711 instead of the storage 104, as compared to the image delivery system 100. The television broadcasting moving image browsing system 710 is a system in which the server 101 delivers content data such as images or voices included in a television broadcasting signal received in the TV tuner 711 to the receiving device 103 through the network 102, and a user of the receiving device 103 browses the contents which are output from the display device 105.

In this manner, even when the server 101 delivers the content data which is supplied from the TV tuner 711, the present disclosure can be applied to the server as is the case with the aforementioned image delivery system 100. That is, the server 101 can suppress an increase in the load of image delivery.

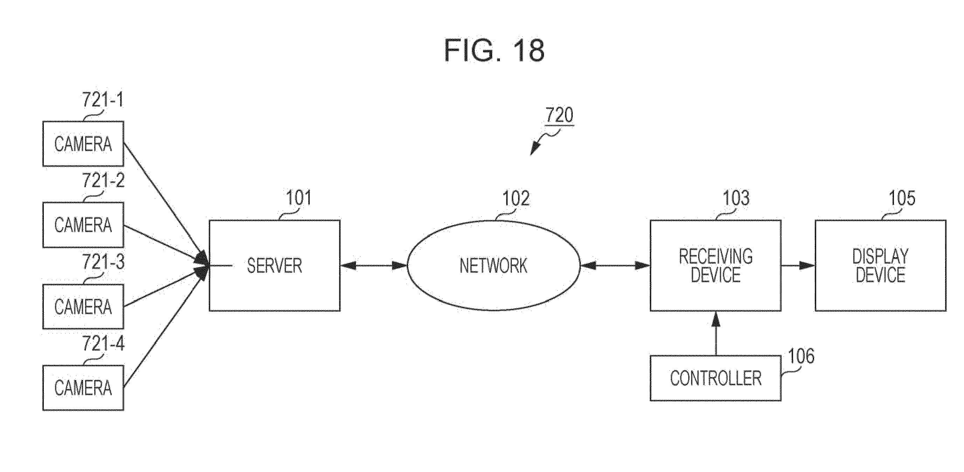

In addition, the present disclosure can also be applied to, for example, a monitoring camera system as shown in Fig. 18. A monitoring camera system 720 as shown in Fig. 18 includes a camera 721-1 to a camera 721-4 instead of the storage 104, as compared to the image delivery system 100. When the camera 721-1 to the camera 721-4 are not desired to be described by discrimination from each other, these cameras are simply called the camera 721. The number of cameras 721 is arbitrary.

The monitoring camera system 720 is a system in which the server 101 delivers content data such as images or voices which are captured and obtained by the camera 721 to the receiving device 103 through the network 102, and a user (such as, for example, a security guard) of the receiving device 103 browses (monitors) the contents which are output from the display device 105.

In this manner, even when the server 101 delivers the captured image data which is supplied from the camera 721, the present disclosure can be applied as is the case with the aforementioned image delivery system 100. That is, the server 101 can suppress an increase in the load of image delivery.

### <5. Fifth Embodiment>

### <Computer>

A series of processes described above can be executed by hardware, and can also be executed by software. When a series of processes are executed by software, a program constituting the software is installed in a computer. Herein, the computer includes a computer incorporated into dedicated hardware, a general-purpose personal computer, for example, which is capable of executing various functions by installing various programs, and the like.

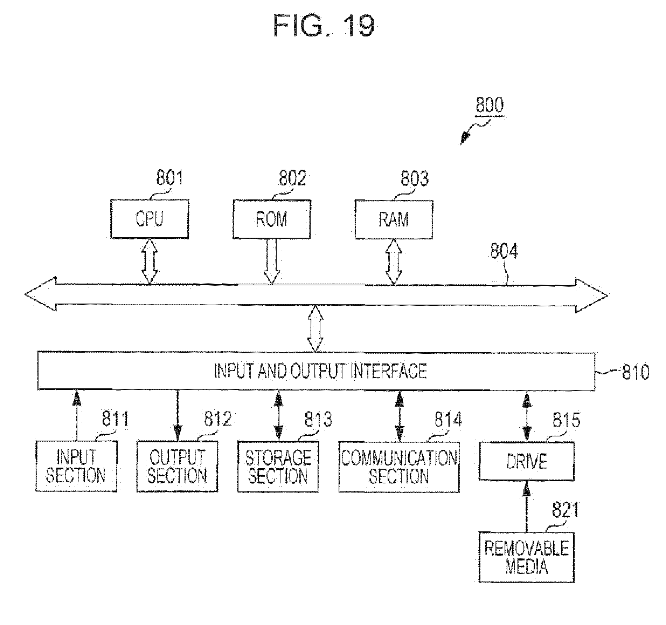

Fig. 19 is a block diagram illustrating a configuration example of hardware of a computer executing a series of processes described above through a program.

In a computer 800 shown in Fig. 19, a CPU (Central Processing Unit) 801, a ROM (Read Only Memory) 802, and a RAM (Random Access Memory) 803 are connected to each other through a bus 804.

An input and output interface 810 is also connected to the bus 804. An input section 811, an output section 812, a storage section 813, a communication section 814, and a drive 815 are connected to the input and output interface 810.

The input section 811 is constituted by, for example, a keyboard, a mouse, a microphone, a touch panel, an input terminal, and the like. The output section 812 is constituted by, for example, a display, a speaker, an output terminal, and the like. The storage section 813 is constituted by, for example, a hard disk, a RAM disk, a non-volatile memory, and the like. The communication section 814 is constituted by, for example, a network interface. The drive 815 drives a removable media 821 such as a magnetic disk, an optical disc, a magnetooptic disc, or a semiconductor memory.

In the computer having such a configuration, the CPU 801 executes, for example, a program which is stored in the storage section 813 by loading the program into the RAM 803 through the input and output interface 810 and the bus 804, and thus a series of processes described above are performed. Data or the like which is desired for the CPU 801 to execute various types of processes is also appropriately stored in the RAM 803.

A program which is executed by the computer (CPU 801) can be applied in a state of being recorded in the removable media 821 as, for example, package media or the like. In that case, the program can be installed in the storage section 813 through the input and output interface 810 by mounting the removable media 821 in the drive 815.

In addition, this program can also be provided through cable or radio transmission mediums such as a local area network, the Internet, and digital satellite broadcasting. In that case, the program can be received in the communication section 814, and be installed in the storage section 813.

Besides, the program can also be installed in the ROM 802 or the storage section 813 in advance.

Meanwhile, the program which is executed by the computer may be a program in which processes are performed in a time-series manner along the procedure described in the present specification, and may be program in which processes are performed in parallel, or at a necessary timing when a call is performed.

In addition, in the present specification, steps of describing a program which is recorded in a recording medium include not only processes which are performed in a time-series manner along the described procedure, but also processes which are executed in parallel or individually without being necessarily processed in a time-series manner.

In addition, in the present specification, the system means a set of a plurality of components (devices, modules (parts) and the like), and it does not matter whether all the components are present in the same housing. Therefore, a plurality of devices, housed in separate housings, which are connected to each other through a network and one device having a plurality of modules housed in one housing are all systems.

In addition, regarding the above, the configuration described as one device (or processing section) may be configured as a plurality of devices (or processing sections) by division thereof. On the contrary, regarding the above, the configuration described as a plurality of devices (or processing sections) may be configured as one device (or processing section) collectively. In addition, a configuration other than those described above may be, of course, added to the configuration of each device (or each processing section). Further, when the configurations or operations as the entire system are substantially the same as each other, a portion of the configuration of a certain device (or processing section) may be included in the configuration of another device (or another processing section).

As described above, preferred embodiments of the present disclosure have been described in detail with reference to the accompanying drawings, but the technical scope of the present disclosure is not limited to such examples. It should understood by those skilled in the art that various modifications, combinations, sub-combinations and alterations may occur depending on design requirements and other factors insofar as they are within the scope of the appended claims or the equivalents thereof.

For example, the present disclosure can have a configuration of cloud computing for performing processes by assigning and sharing one function in a plurality of devices through a network.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

In addition, each step described in the aforementioned flow diagrams can be assigned and executed in a plurality of devices, in addition to being executed in one device.

Further, when a plurality of processes are included in one step, the plurality of processes included in the one step can be assigned and executed in a plurality of devices, in addition to being executed in one device.

Meanwhile, the present disclosure may include the following configurations.
(1) An image processing apparatus including:
   a setting section that sets a display region in an image region having a plurality of images lined up therein, on the basis of instruction information;
   a correction section that corrects the display region which is set by the setting section so as to reduce the number of images included in the display region; and
   a supply section that selects and supplies bit streams of the images included in the display region which is corrected by the correction section, from respective bit streams of the plurality of images which are encoded independently of each other.
(2) The image processing apparatus according to (1), wherein the correction section corrects at least any one of a position, size, and aspect ratio of the display region.
(3) The image processing apparatus according to (1) or (2), wherein the correction section corrects the display region which is set by the setting section so that a partial image included in the display region is located outside a region.
(4) The image processing apparatus according to any one of (1) to (3), wherein the correction section corrects the display region which is set by the setting section so that the images included in the display region become only a whole image.
(5) The image processing apparatus according to any one of (1) to (4), wherein the correction section corrects the display region which is set by the setting section so that the images included in the display region become only a single whole image.
(6) The image processing apparatus according to any one of (1) to (5), wherein the correction section corrects the display region which is set by the setting section when the single whole image occupies a predetermined ratio or more in the display region which is set by the setting section.
(7) The image processing apparatus according to any one of (1) to (6), wherein the correction section corrects the display region which is set by the setting section in a state where the instruction information is not given for a predetermined period.
(8) The image processing apparatus according to any one of (1) to (7), further including:
   a decoding section that decodes respective bit streams of a plurality of images when the plurality of images are included in the display region;
   a generation section that generates image data of the display region, using each piece of image data which is decoded and obtained by the decoding section; and
   an encoding section that encodes the image data of the display region which is generated by the generation section.
(9) The image processing apparatus according to any one of (1) to (8), further including a storage section that stores the respective bit streams of the plurality of images,
   wherein the supply section reads out and supplies the bit streams of the images included in the display region which are corrected by the correction section, from the storage section.
(10) The image processing apparatus according to any one of (1) to (9), further including:
   a rendering parameter generation section that generates a rendering parameter for rendering the single partial image when the display region which is set by the setting section is constituted by a single partial image; and
   a rendering parameter supply section that supplies the rendering parameter which is generated by the rendering parameter generation section.
(11) The image processing apparatus according to any one of (1) to (10), further including an acquisition section that acquires the instruction information,
   wherein the setting section sets the display region on the basis of the instruction information which is acquired by the acquisition section.
(12) The image processing apparatus according to any one of (1) to (11), wherein the instruction information is information indicating a user's operation which is input.
(13) An image processing method including:
   setting a display region in an image region having a plurality of images lined up therein, on the basis of instruction information;
   correcting the display region which is set so as to reduce the number of images included in the display region; and
   selecting and supplying bit streams of the images included in the display region which is corrected, from respective bit streams of the plurality of images which are encoded independently of each other.

It should be understood by those skilled in the art that various modifications, combinations, sub-combinations and alterations may occur depending on design requirements and other factors insofar as they are within the scope of the appended claims or the equivalents thereof.

## Claims

1. An image processing apparatus comprising:
a setting section that sets a display region in an image region having a plurality of images lined up therein, on the basis of instruction information;
a correction section that corrects the display region which is set by the setting section so as to reduce the number of images included in the display region; and
a supply section that selects and supplies bit streams of the images included in the display region which is corrected by the correction section, from respective bit streams of the plurality of images which are encoded independently of each other.

2. The image processing apparatus according to claim 1, wherein the correction section corrects at least any one of a position, size, and aspect ratio of the display region.

3. The image processing apparatus according to claim 1, wherein the correction section corrects the display region which is set by the setting section so that a partial image included in the display region is located outside a region.

4. The image processing apparatus according to claim 1, wherein the correction section corrects the display region which is set by the setting section so that the images included in the display region become only a whole image.

5. The image processing apparatus according to claim 1, wherein the correction section corrects the display region which is set by the setting section so that the images included in the display region become only a single whole image.

6. The image processing apparatus according to claim 5, wherein the correction section corrects the display region which is set by the setting section when the single whole image occupies a predetermined ratio or more in the display region which is set by the setting section.

7. The image processing apparatus according to claim 1, wherein the correction section corrects the display region which is set by the setting section in a state where the instruction information is not given for a predetermined period.

8. The image processing apparatus according to claim 1, further comprising:
a decoding section that decodes respective bit streams of a plurality of images when the plurality of images are included in the display region;
a generation section that generates image data of the display region, using each piece of image data which is decoded and obtained by the decoding section; and
an encoding section that encodes the image data of the display region which is generated by the generation section.

9. The image processing apparatus according to claim 1, further comprising a storage section that stores the respective bit streams of the plurality of images,
wherein the supply section reads out and supplies the bit streams of the images included in the display region which are corrected by the correction section, from the storage section.

10. The image processing apparatus according to claim 1, further comprising:
a rendering parameter generation section that generates a rendering parameter for rendering the single partial image when the display region which is set by the setting section is constituted by a single partial image; and
a rendering parameter supply section that supplies the rendering parameter which is generated by the rendering parameter generation section.

11. The image processing apparatus according to claim 1, further comprising an acquisition section that acquires the instruction information,
wherein the setting section sets the display region on the basis of the instruction information which is acquired by the acquisition section.

12. The image processing apparatus according to claim 11, wherein the instruction information is information indicating a user's operation which is input.

13. An image processing method comprising:
setting a display region in an image region having a plurality of images lined up therein, on the basis of instruction information;
correcting the display region which is set so as to reduce the number of images included in the display region; and
selecting and supplying bit streams of the images included in the display region which is corrected, from respective bit streams of the plurality of images which are encoded independently of each other.
